Europäisches Patentamt

European Patent Office

Office européen des brevets

(11) Publication number: **0 296 821**
**A1**

## (12) EUROPEAN PATENT APPLICATION

(21) Application number: 88305683.0

(22) Date of filing: 22.06.88

(51) Int. Cl.⁴: **F16L 58/18 , C23F 15/00**

(30) Priority: 24.06.87 GB 8714722
30.12.87 GB 8730275

(43) Date of publication of application:
**28.12.88 Bulletin 88/52**

(84) Designated Contracting States:
**AT BE CH DE ES FR GB GR IT LI LU NL SE**

(71) Applicant: **LECK HASLAM LIMITED**
**76 Durham Drive**
**Fellgate Jarrow Tyne & Wear N32 4PN(GB)**

(72) Inventor: **Leck, Ogle Waite**
**76 Durham Drive Fellgate**
**Jarrow Tyne & Wear NE32 4PN(GB)**

(74) Representative: **Sanderson, Michael John et al**
**MEWBURN ELLIS & CO 2/3 Cursitor Street**
**London EC4A 1BQ(GB)**

(54) Anti-corrosion device for pipe flanges.

(57) An anti-corrosion device for raised-face pipe flanges comprises an elongate belt (2) of flexible, non-corrosive material adapted to be wrapped around the joint between abutting pipe flanges (18) to close the annular space (30) between the outer regions (22) of the two flanges (18). The belt (2) is provided with locating means (4) on the inside face thereof for location within the annular space (30) to react between the outer regions (22) of the pipe flanges (18) and to prevent axial movement of the belt (2) relative to the pipe flanges (18), and fastening means (10,12,14,15) to secure the belt (2) circumferentially about the joint. Means (6) are provided to enable a corrosion inhibiting material to be injected through the belt into the annular space (30) to coat the surfaces of the pipe flanges (18) within the annular space (30).

FIG.7

Xerox Copy Centre

## ANTI CORROSION DEVICE FOR PIPE FLANGES

This invention relates to anti-corrosion devices for pipe flanges and more particularly to such devices for pipes provided with separate end flanges of the raised-face type welded thereto and for pipes of ring-type joint design in which the flange comprises a ring welded adjacent one end of the pipe with said one end of the pipe projecting slightly axially beyond the ring to constitute a raised face to the end flange.

Hereinafter the term 'raised face pipe flange' is to be understood as covering both the above arrangements.

Fluid-carrying pipes, such as those for oil, gas, or water, commonly incorporate end flanges of the raised-face type in which the central region of the flange projects axially beyond the remaining annular outer regions of the flange.

On joining together two such pipe lengths, the raised central regions of the end flanges of the two lengths abut one another with a gasket therebetween, the joint being effected by circumferentially-spaced, axially-extending bolts passing through holes in the outer regions of the end flanges and secured in position by associated nuts.

Thus, an annular gap is formed between the outer regions of the two pipe flanges.

Most pipe flanges are of carbon steel and as such are prone to corrosion. New pipes and end flanges are commonly protected by an application of paint. Eventually, however, all paint systems tend to break down and corrosion begins to occur.

The annular area between the outer regions of the flanges is substantially inaccessible and it is virtually impossible to re-treat this area by cleaning off the corrosion and re-painting without disconnecting the pipe lengths.

However, the nuts and bolts connecting the pipe flanges together have invariably corroded such that they can only be removed by cutting, which is a costly and time-consuming procedure, while disconnection of the pipe lengths often necessitates sections of the associated plant being shut down, which can itself be a costly and inconvenient exercise.

It would be desirable to be able to provide means which substantially prevent corrosion of raised-face pipe flanges as hereinbefore defined whereby re-treatment, and the expense and inconvenience associated therewith, becomes unnecessary.

According to the present invention there is provided an anti-corrosion device for raised-face pipe flanges, comprising an elongate belt of flexible, non-corrosive material adapted to be wrapped around the joint between abutting pipe flanges to close the annular space between the outer regions of the pipe flanges, fastening means to secure the belt circumferentially about the joint, locating means on the inside of the belt for location within the annular space to react between the outer regions of the two pipe flanges to prevent axial movement of the belt relative thereto, and means enabling a corrosion inhibiting material to be injected into said annular space.

Thus it will be appreciated that a corrosion inhibiting material can be injected into the annular space bounded by the outer regions of the pipe flanges and the belt to coat said outer regions of the pipe flanges, the coupling bolts and the mouths of the bolt holes as well as to seal said space, thus preventing subsequent corrosion as would otherwise occur.

Preferably the locating means comprises a plurality of protrusions spaced along the length of the inner face of the belt and integrally formed with the belt. Alternatively said locating means may comprise a continuous protrusion formed centrally along the length of the inner face of the belt and integral with the belt.

Conveniently the fastening means comprises a tongue on one end of the belt and one or more receiving loops on the other end of the belt, said tongue and loop or loops including co-operating means adapted to retain the tongue within the or each loop, whereby the belt can be tensioned about the joint between the abutting pipe flanges and retained by the fastening means in said tensioned condition.

The co-operating means on the tongue and the or each loop may comprise serrated teeth formed on co-operating surfaces of both the tongue and the or each loop and shaped to permit insertion of the tongue through the or each loop but to prevent removal of the tongue from the or each loop.

The belt may be provided with one or more grease nipples therein to permit injection therethrough of the corrosion inhibiting material. Alternatively said material may be injected through a plurality of holes formed through the belt and spaced along the length thereof, each hole being provided with an associated plug for insertion therein subsequent to the injection process.

By way of example only, an embodiment of the invention will now be described in greater detail with reference to the accompanying drawings of which:

Figs. 1, 2 and 3 are plan view from below, side view and plan view from above respectively of a device according to the invention;

Figs. 4 and 5 show in more detail the fastening means of the device of Figs. 1 to 3 in the unfastened and fastened condition respectively;

Fig. 6 is a transverse section through a joint between two pipe flanges and incorporating a device according to the invention, and

Fig. 7 is a longitudinal section through the joint of Fig. 6.

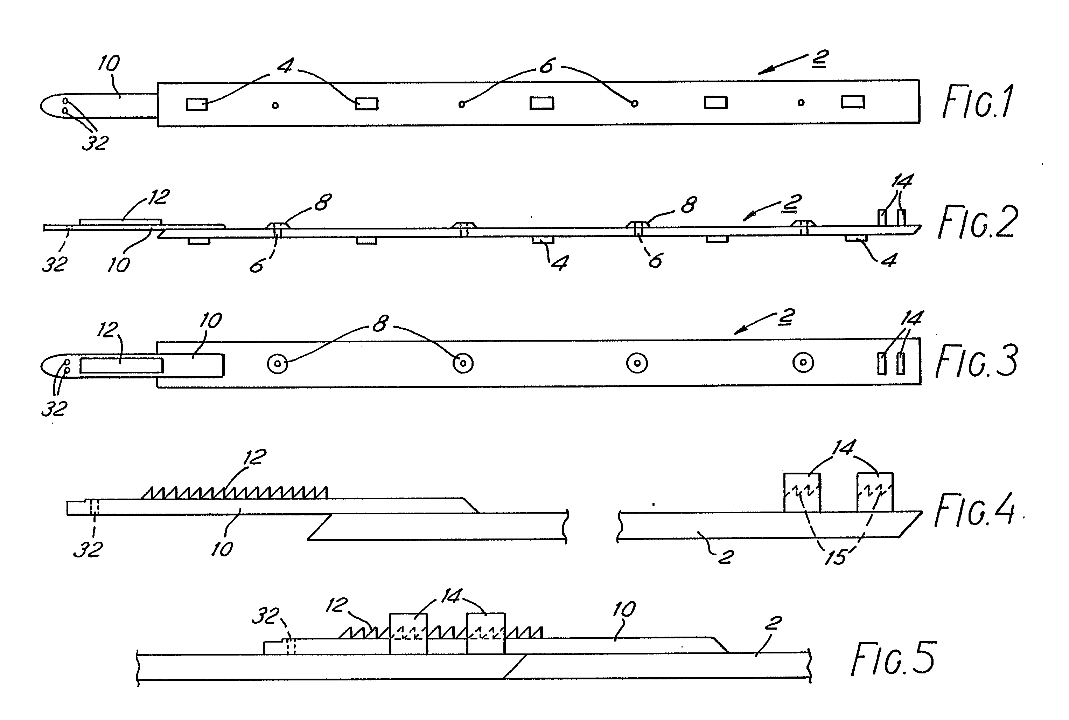

Referring to Figs. 1 to 5 of the drawings, the illustrated anti-corrosion device comprises an elongate belt indicated generally at 2 of a flexible, non-corrosive material such as plastics which is resistant to attack from all types of weather elements, as well as from ultra violet rays, chemicals and acids.

Integrally formed on the underside of the belt 2 are a plurality of longitudinally spaced protrusions 4 each centrally disposed relative to the width of the belt and each of tapering transverse section (as best seen in Fig. 7), while a plurality of longitudinally spaced holes 6 are formed through the belt 2 between adjacent protrusions 4, said holes 6 being bounded on the outer side of the belt 2 by annular reinforced areas 8 also integrally formed with the belt 2.

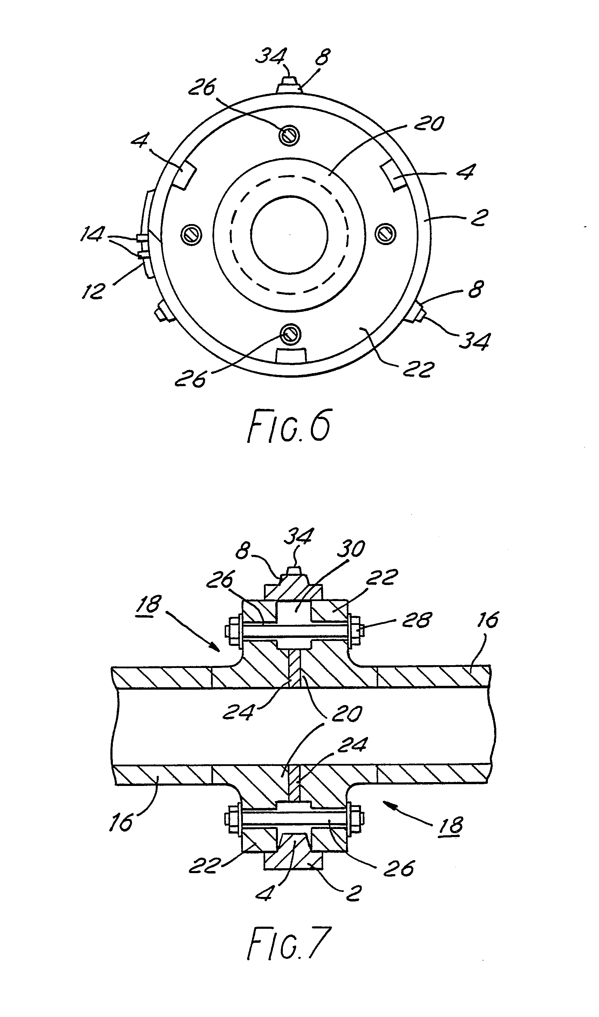

Welded or otherwise secured to the outer side of one end of the belt 2 is a tongue 10 on the upper surface of which are formed a series of teeth 12, each tooth 12 being defined by a substantially upright rear wall and a downwardly and forwardly tapering front wall as best seen in Figs. 4 and 5.

A pair of loops 14 are provided on the outer side of the other end of the belt 2, each loop 14 having a series of teeth 15 projecting downwardly from the upper inner surface thereof, each tooth 15 being defined by a substantially upright front wall and a downwardly and forwardly tapering rear wall, as best seen in Fig. 4.

The described belt is adapted for use on a pipe connection such as that in Figs. 6 and 7. More particularly these figures show a pair of pipe lengths 16 each provided with an end flange 18 of the raised-face type. Each end flange 18 comprises an axially projecting central region 20 and an annular outer region 22 provided with a plurality of circumferentially-spaced, axially-extending bolt holes therethrough.

A gasket 24 is located between aligned central regions 20 of the two end flanges and the joint is effected by means of bolts extending through the bolt holes in the outer regions 22 of the end flanges, and associated nuts 28.

Thus it will be appreciated that such a connection between end flanges of the raised face type results in the formation of an annular space 30 between the outer regions 22 of the two end flanges 18 whereby said regions, as well as the bolts 26 extending therethrough, are open to attack by the elements and subsequent corrosion as and when the initially-applied protective paint layer thereon breaks down.

The device according to the invention and as described above substantially prevents such corrosion as follows.

The belt 2 is wrapped around the end flanges 18 with the projections 4 located in the annular space 30, and the other end of the belt 2 carrying the loops 14 is marked and cut on the bias to mate with the angled one end of the belt 2 to ensure a good butt fit between the two ends of the belt 2.

The belt 2 is again wrapped around the end flanges 18 and the tongue 10 is pushed through the loops 14 as seen in Fig. 5 and is pulled tight until the ends of the belt abut one another. The teeth 12,15 on the tongue 10 and loops 14 respectively intermesh with one another, the configuration of said teeth being such as to permit insertion of the tongue through the loops but to prevent removal of the tongue from the loops whereby the belt is locked in position around the end flanges. A pair of reinforced holes 32 are provided in the free end of the tongue 10 into which a pulling tool can be inserted to assist in the pulling of the tongue 10 through the loops 14 and the tensioning of the belt 2.

A corrosion inhibitor is then applied by placing an applicator nozzle in each hole 6 in turn and injecting or spraying the material into the annular space 30 thereby coating the surfaces of the outer regions 22 of the flanges 18 as well as the bolts 26 and the entrances to the bolt holes.

After injection or spraying through each hole to ensure total coverage of the surfaces bounding the space 30, plugs 34 are located one in each hole 6 to prevent loss of inhibitor therethrough.

Thus it will be appreciated that the belt 2 is securely positioned around the joint between the two end flanges 18 to seal the space 30 between said flanges, the tongue 10 and loops 14 co-operating to effect circumferential tension, while the co-operation between the protrusions 4 and the outer regions 22 of the end flanges 18 prevents any axial movement of the belt 2 relative to the pipe lengths 16. The application of the corrosion inhibitor as detailed above prevents the formation of corrosion within the belt and such that, when it is desired to split the end flanges 18 apart, for example to renew the gasket 24, this can be done quicker and more cheaply than heretofore because of the lack of corrosion in and around the bolt holes.

The precise construction of the device may differ from that described and illustrated. The spaced protrusions 4 may be replaced by a continuous protrusion extending substantially the length of the belt 2, while the number of holes in the belt 2 will be determined by the size of the belt required for a particular joint. Instead of providing holes 6 for the injection therethrough of the corrosion inhibiting material, one or more grease nipples may be provided, located to ensure complete coverage of the surfaces within the space 30. Other modifications and variations from the described arrangement will be apparent to those skilled in the art.

As previously mentioned, the invention is equally applicable to the commonly called 'ring-type joint design' which is used in low pressure situations. In such an arrangement, a ring is welded adjacent one end of the pipe with said one end of the pipe projecting slightly axially beyond the ring effectively to comprise a central raised face to the end flange formed by the ring.

## Claims

1. An anti-corrosion device for raised-face pipe flanges characterised by an elongate belt (2) of flexible, non-corrosive material adapted to be wrapped around the joint between abutting pipe flanges (18) to close the annular space (30) between the outer regions (22) of the pipe flanges (18), fastening means (10,12,14,15) to secure the belt (2) circumferentially about the joint, locating means (4) on the inside of the belt (2) for location within the annular space (30) to react between the outer regions (22) of the two pipe flanges (18) to prevent axial movement of the belt (2) relative thereto, and means (6) enabling a corrosion inhibiting material to be injected into said annular space (30).

2. A device as claimed in claim 1 in which the locating means comprises a plurality of protrusions (4) spaced along the length of the inner face of the belt (2) and integrally formed with the belt (2).

3. A device as claimed in claim 1 in which the locating means comprises a continuous protrusion formed centrally along the length of the inner face of the belt (2) and integral with the belt (2).

4. A device as claimed in any one of claims 1 to 3 in which the fastening means comprises a tongue (10) on one end of the belt (2) and one or more receiving loops (14) on the other end of the belt (2), said tongue (10) and loop or loops (14) including co-operating means (12,15) adapted to retain the tongue (10) within the or each loop (14) whereby the belt (2) can be tensioned about the joint between the abutting pipe flanges (18) and retained by the fastening means in said tensioned condition.

5. A device as claimed in claim 4 in which the co-operating means on the tongue (10) and the or each loop (14) comprises serrated teeth (12,15) formed on the co-operating surfaces of both the tongue (10) and the or each loop (14) and shaped to permit insertion of the tongue (10) through the or each loop (14) but to prevent removal of the tongue (10) from the or each loop (14).

6. A device as claimed in any one of claims 1 to 5 in which the means enabling a corrosion inhibiting material to be injected into the annular space (30) comprises one or more grease nipples in the belt (2).

7. A device as claimed in any one of claims 1 to 5 in which the means enabling a corrosion inhibiting material to be injected into the annular space (30) comprises a plurality of holes (6) formed through the belt (2) and spaced along the length thereof, each hole(16) being provided with an associated plug (34) for insertion therein subsequent to the injection process.

FIG.1

FIG.2

FIG.3

FIG.4.

FIG.5

Neu eingereicht / Newly filed
Nouvellement déposé

FIG.6

FIG.7

## DOCUMENTS CONSIDERED TO BE RELEVANT

EP 88305683.0

| Category | Citation of document with indication, where appropriate, of relevant passages | Relevant to claim | CLASSIFICATION OF THE APPLICATION (Int. Cl.4) |
|---|---|---|---|
| X | GB - A - 1 417 145 (R. OGDEN AND COMPANY) <br> * Totality * <br> -- | 1,4,5 | F 16 L 58/18 <br> C 23 F 15/00 |
| A | US - A - 4 216 980 (SHREVE) <br> * Totality * <br> -- | 1 | |
| A | EP - A2 - 0 132 997 (RODUN DEVELOPMENT CORPORATION) <br> * Totality * <br> -- | 1 | |
| A | DE - A1 - 3 422 544 (FA. INGENIEUR WALDEMAR SUCKUT) <br> ---- | | |

| TECHNICAL FIELDS SEARCHED (Int. Cl.4) |
|---|
| F 16 L 23/00 |
| F 16 L 25/00 |
| F 16 L 58/00 |
| C 23 F 13/00 |
| C 23 F 15/00 |

The present search report has been drawn up for all claims

| Place of search | Date of completion of the search | Examiner |
|---|---|---|
| VIENNA | 14-09-1988 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82